# EUROPÄISCHE PATENTSCHRIFT

(11) **EP 1 297 311 B1**
(45) Veröffentlichungstag und Bekanntmachung des Hinweises auf die Patenterteilung: **02.03.2005**
(21) Anmeldenummer: 01943045.3
(22) Anmeldetag: 09.05.2001
(51) Int. Cl.: G01D 5/353, G01L 1/24, B60R 21/01

(54) **OPTISCHER VERFORMUNGSSENSOR MIT FUNKTIONSÜBERPRÜFUNG DURCH VERSCHIEDENE WELLENLÄNGEN FÜR SEITENCRASH**
OPTICAL DEFORMATION SENSOR WITH OPERATIONAL TESTING BY DIFFERENT WAVELENGHTS, FOR SIDE CRASHES
CAPTEUR DE DEFORMATION OPTIQUE A CONTROLE DE FONCTIONNEMENT PAR DIFFERENTES LONGUEURS D'ONDE DESTINE A DES IMPACTS LATERAUX

(30) Priorität: 26.05.2000 DE 10026330
(43) Veröffentlichungstag der Anmeldung: 02.04.2003
(73) Patentinhaber: ROBERT BOSCH GMBH, 70442 Stuttgart (DE)
(72) Erfinder: STUETZLER, Frank-Jürgen, Farmington Hills, MI 48331 (US)
(86) Internationale Anmeldenummer: PCT/DE2001/001765
(87) Internationale Veröffentlichungsnummer: WO 2001/090697

(56) Entgegenhaltungen:
- DE-A- 4 433 046
- DE-A- 19 757 118
- US-A- 4 270 050
- US-A- 4 727 254
- US-A- 5 118 931

## Beschreibung

### Stand der Technik

Die vorliegende Erfindung betrifft einen Verformungssensor, bestehend aus einem optischen Übertragungsmedium, Mitteln zum Einkoppeln von Licht in das Übertragungsmedium und Mitteln zum Empfangen des über das Übertragungsmedium übertragenen Lichts, wobei eine Auswerteeinheit vorhanden ist, welche die verformungsabhängige Veränderung der Intensität des empfangenen Lichts erfasst.

Ein derartiger Verformungssensor ist aus der DE 42 20 270 A1 bekannt. Insbesondere soll ein solcher Verformungssensor, der aus einem optischen Übertragungsmedium mit daran angekoppelten Sende- und Empfangselementen besteht, dazu dienen, Verformungen der Fahrzeugkarosserie zu erfassen, die ein Fahrzeug bei einem Crash erfährt. Bevorzugt kann ein solcher optischer Verformungssensor zur Erkennung von Seitencrashes bei Fahrzeugen eingesetzt werden. Ein optisches Übertragungsmedium, das wie bei der genannten Schrift aus einem Lichtwellenleiter besteht, verändert aufgrund des sogenannten Microbending-Effekts bei einer Krümmung, welche bei einer Karosserieverformung zustande kommt, seine Lichtübertragungseigenschaften. Es ändert sich nämlich die Intensität des übertragenen Lichts, wenn der Lichtwellenleiter aufgrund einer Verformung desjenigen Karosserieteils, auf dem der Lichtwellenleiter aufgebracht ist, eine Krümmung erfährt.

Das optische Übertragungsmedium eines Verformungssensors, wie er aus der US 5,917,180 bekannt ist, besteht aus einem deformierbaren optisch durchlässigen Körper, z.B. aus Polyurethan-Schaumstoff. Die optischen Streueigenschaften dieses deformierbaren, lichtdurchlässigen Körpers verändern sich, wenn auf ihn Druck ausgeübt wird, was z.B. bei einer Verformung des Karosserieteils, auf dem der Körper angebracht ist, geschieht.

Um durch den Crashsensor im Fahrzeug verursachte Fehlauslösungen von Rückhalteeinrichtungen (Airbags, Gurtstraffer, Überrollbügel etc.) und ebenso ein fehlerhaftes Nichtauslösen bei einem Crash zu vermeiden, ist eine ständige Funktionsüberprüfung des Verformungssensors erforderlich. Stand der Technik ist in diesem Zusammenhang die Verwendung mindestens eines weiteren andersartigen Sensors - das kann z.B. ein Beschleunigungssensor sein, der zusätzlich zum Verformungssensor an irgendeiner anderen Stelle im Fahrzeug angeordnet ist. Wie aus der DE 42 20 270 A1 hervorgeht, kann die Funktionsüberprüfung auch mittels eines zweiten gleichartigen Verformungssensors erfolgen. In jedem Fall muß ein weiterer zusätzlicher Sensor im Fahrzeug angeordnet werden.

Der Erfindung liegt nun die Aufgabe zugrunde, einen Verformungssensor der eingangs genannten Art anzugeben, bei dem zu seiner Funktionsüberprüfung kein weiterer zusätzlicher Sensor erforderlich ist.

### Vorteile der Erfindung

Die genannte Aufgabe wird mit den Merkmalen des Anspruchs 1 dadurch gelöst, dass mehrere Sendeelemente vorhanden sind, die Licht verschiedener Wellenlängen in das Übertragungsmedium des Verformungssensors einkoppeln und dass mehrere Empfangselemente vorhanden sind, welche das übertragene Licht wellenlängenselektiv aus dem Übertragungsmedium auskoppeln. Eine Auswerteeinheit erfasst die Abweichungen zwischen den Ausgangssignalen der Empfangselemente und meldet eine Fehlfunktion des Sensors, wenn die Abweichungen ein vorgegebenes Maß überschreiten.

Gemäss der Erfindung kann mit ein und demselben Verformungssensor ausser seiner eigentlichen'Funktion der Verformungssensierung gleichzeitig auch eine Überprüfung seiner Funktion auf Fehler durchgeführt werden. Auf einen zusätzlichen Sensor, der ausschließlich für die Funktionsüberprüfung des Verformungssensors zuständig ist, kann verzichtet werden. Da mit einem einzigen Sensor sowohl Verformungen sensiert und gleichzeitig eine Funktionsüberwachung durchgeführt wird, also keine zusätzliche Befragung eines weiteren Sensors erforderlich ist, verkürzt sich die Zeit zwischen dem Crashbeginn bei einem Fahrzeug und der Bereitstellung eines Auslösesignals für die Rückhaltesysteme.

Vorteilhafte Weiterbildungen der Erfindung gehen aus den Unteransprüchen hervor.

Das Übertragungsmedium des Verformungssensors besteht vorzugsweise entweder aus ein oder mehreren Lichtwellenleitern oder aus einem deformierbaren, lichtdurchlässigen Körper. Zur Ein- und Auskopplung von Lichtwellen in und aus dem deformierbaren, lichtdurchlässigen Körper können z.B. Lichtwellenleiter in diesen hinein geführt werden. Es können aber auch Empfangs- und Sendeelemente direkt in den deformierbaren, lichtdurchlässigen Körper eingesetzt werden.

Für den Empfang der über das Übertragungsmedium übertragenen Lichtwellen können Empfangselemente eingesetzt werden, die auf Intensitätsänderung des über das Übertragungsmedium übertragenen Lichts entweder gleichartig oder invers reagieren.

### Zeichnung

Anhand mehrerer in der Zeichnung dargestellter Ausführungsbeispiele wird nachstehend die Erfindung näher erläutert. Es zeigen:
Figur 1 einen Verformungssensor mit einem Lichtwellenleiter als Übertragungsmedium,
Figur 2 einen Verformungssensor mit einem deformierbaren, lichtdurchlässigen Körper als Übertragungsmedium mit Lichtwellenleitern zur Auskopplung von Licht,
Figur 3 einen Verformungssensor mit einem deformierbaren, lichtdurchlässigen Körper als Übertragungsmedium, in dem Sende- und Empfangselemente direkt integriert sind,
Figur 4 verschiedene Abhängigkeiten der Ausgangssignale der Empfangselemente in Abhängigkeit von der empfangenen Lichtintensität.

### Beschreibung von Ausführungsbeispielen

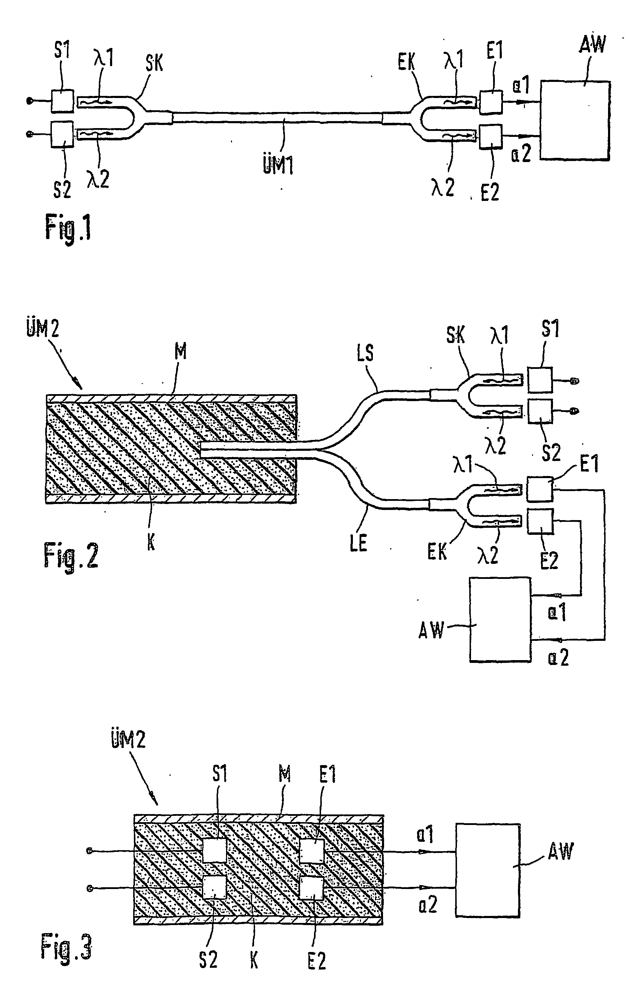

In der Figur 1 ist ein Verformungssensor dargestellt, dessen optisches Übertragungsmedium ÜM1 aus einer einzigen Lichtleitfaser oder auch aus einem Bündel von mehreren Lichtleitfasern besteht. Soll beispielsweise der Verformungssensor als Seitencrashsensor für ein Fahrzeug eingesetzt werden, so wird diese Lichtleitfaser ÜM1 vorzugsweise in einer Seitentür des Fahrzeugs installiert. Kommt es nun aufgrund eines Seitencrashes zu einer Verformung der Seitentür und damit zu einer Verformung, d.h. Krümmung, des Lichtwellenleiters ÜM1, so bewirkt diese Krümmung des Lichtwellenleiters aufgrund des bekannten Microbending-Effekts eine Intensitätsveränderung des über den Lichtwellenleiter übertragenen Lichts. Diese auf die nachfolgend beschriebene Weise erfasste Intensitätsveränderung des über den Lichtwellenleiter ÜM1 übertragenen Lichts liefert also eine direkte Information bei einer durch einen Crash verursachten Deformation der Fahrzeugkarosserie.

An einem Ende des Lichtwellenleiters ÜM1 ist eine Lichtwellenleiterverzweigung SK angeschlossen, über welche von zwei optischen Sendeelementen S1 und S2 Licht zweier verschiedener Wellenlängen λ1 und λ2 in den Wellenleiter ÜM1 eingekoppelt wird. Die Sendeelemente S1 und S2 sind elektrooptische Wandler, z.B. Leuchtdioden (LED). Das von beiden Sendeelementen S1 und S2 in den Lichtwellenleiter ÜM1 eingekoppelte Licht soll eindeutig voneinander selektierbar sein. Deshalb sendet das Sendeelement S1 z.B. Licht im Infrarot-Wellenlängenbereich λ1 und das zweite Sendeelement S2 Licht z.B. im ultravioletten Wellenlängenbereich λ2.

Am anderen Ende des Lichtwellenleiters ÜM1 ist eine Lichtwellenleiterverzweigung EK angeschlossen, welche das über den Lichtwellenleiter ÜM1 übertragene Licht auf ein erstes Empfangselement E1 und auf ein zweites Empfangselement E2 aufteilt. Die Empfangselemente E1 und E2 können übliche Fotodioden oder Fototransistoren sein. Für die Trennung der beiden Wellenlängenbereiche λ1 und λ2 besitzt das Empfangselement E1 eine Empfindlichkeit für den Wellenlängenbereich λ1 (z.B. Infrarot) und das Empfangselement E2 eine Empfindlichkeit für den Wellenlängenbereich λ2 (z.B. Ultraviolett). Um die Trennung zwischen den beiden Wellenlängenbereichen λ1 und λ2 noch zu verbessern, können zwischen die Enden der Verzweigung EK und den Empfangselementen E1 und E2 optische Filter eingefügt werden, welche auf die gewünschten Wellenlängenbereiche λ1 und λ2 abgestimmt sind.

Anstelle der empfangsseitigen Lichtwellenleiterverzweigung EK kann auch ein wellenlängenselektiver Koppler vorgesehen werden, welcher an seinen beiden Ausgängen Licht getrennt nach den Wellenlängen λ1 und λ2 den Empfangselementen E1 und E2 zuführt.

Die elektrischen Ausgangssignale a1 und a2 der beiden optoelektrischen Empfangselemente E1 und E2 werden einer Auswerteschaltung AW zugeführt. Bei der Übertragung des aus den Sendelementen S1 und S2 eingekoppelten Lichts beider Wellenlängenbereiche λ1 und λ2 über den Lichtwellenleiter ÜM1 wirkt sich eine Krümmung des Lichtwellenleiters ÜM1 auf das Licht beider Wellenlängenbereiche λ1 und λ2 aus. Die beiden Ausgangssignale a1 und a2 der Empfangselemente E1 und E2 zeigen also bei einer Verformung des Lichtwellenleiters ÜM1 eine Reaktion in Form einer Signalpegeländerung aufgrund der Intensitätsänderung des übertragenen Lichts. Sollte nun eines der Sendeelemente S1, S2 oder der Empfangselemente E1, E2 defekt sein, so würde sich in den beiden Ausgangssignalen a1 und a2 der Empfangselemente E1, E2 eine deutliche gegenseitige Abweichung zeigen. Die Auswerteschaltung AW vergleicht daher die beiden Ausgangssignale a1 und a2 der Empfangselemente E1, E2 miteinander und meldet eine Fehlfunktion des Sensors, wenn zwischen beiden Ausgangssignalen a1, a2 eine Pegelabweichung vorliegt, welche ein vorgegebenes Maß überschreitet. Auf diese Art und Weise kann eine zuverlässige Funktionsüberprüfung des Sensors durchgeführt werden. Wird eine Fehlfunktion des Sensors festgestellt, so wird an ein im Fahrzeug vorhandenes Steuergerät für Rückhaltesysteme die Information weitergegeben, dass dieser Sensor bei der Gewinnung von Auslöseentscheidungen nicht berücksichtigt werden darf.,

Sollte es zu einem Bruch des Lichtwellenleiters ÜM1 kommen, so erkennt die Auswerteschaltung AW diesen Defekt daran, dass beide Ausgangssignale a1 und a2 keinen Signalpegel aufweisen.

In der Figur 2 ist ein weiteres Ausführungsbeispiel für ein Übertragungsmedium eines Verformungssensors dargestellt. Für die Ein- und Auskopplung von Licht verschiedener Wellenlängenbereiche λ1 und λ2 werden hier dieselben Mittel verwendet, wie bereits im Zusammenhang mit dem Ausführungsbeispiel der Figur 1 beschrieben. Deshalb wird hier auf diese Mittel nicht mehr näher eingegangen.

Das in der Figur 2 gezeigte Übertragungsmedium ÜM2 des Verformungssensors besteht aus einem verformbaren, lichtdurchlässigen Körper K, der von einem nicht lichtdurchlässigem Mantel M umgeben ist. Der deformierbare, lichtdurchlässige Körper besteht beispielsweise aus Polyurethan-Schaumstoff. Dieser Körper K hat die Eigenschaft, dass er bei einem von außen einwirkenden Druck oder einer Verformung seine optischen Streueigenschaften verändert. Wird nun Licht in den Körper K eingekoppelt, so wird sich bei einer Verformung des Körpers K die Intensität des aus dem Körper K ausgekoppelten Lichts verändern.

Wie in der Figur 2 gezeigt, wird Licht der beiden Wellenlängenbereiche λ1 und λ2 aus den Sendeelementen S1 und S2 über die Lichtwellenleiterverzweigung SK und einen Sende-Lichtwellenleiter LS in den Körper K1 eingekoppelt. Dieser Sende-Lichtwellenleiter LS dringt zu diesem Zweck in den Körper K ein. Ebenfalls dringt ein Empfangs-Lichtwellenleiter LE in den Körper K ein und führt das darüber ausgekoppelte Licht über die Lichtwellenleiterverzweigung bzw. über den wellenlängenselektiven Koppler EK den beiden Empfangselementen E1 und E2 zu. Bei dem Ausführungsbeispiel nach Figur 2 sind der Sende-Lichtwellenleiter LS und der Empfangs-Lichtwellenleiter LE an der gleichen Stelle in den Körper K eingeführt. Davon abweichend können die beiden Lichtwellenleiter LS und LE von verschiedenen Seiten her in den Körper K eindringen.

Das in der Figur 2 dargestellte Übertragungsmedium ÜM2 und seine Wirkungsweise bei einer Verformung geht aus der einleitend genannten US 5,917,180 hervor.

Die Ein- und Auskopplung von Licht in den deformierbaren, lichtdurchlässigen Körper K des Übertragungsmediums ÜM2 kann auch, wie in der Figur 3 dargestellt, dadurch erfolgen, dass die Sendeelemente S1, S2 und die Empfangselemente E1, E2 direkt in den Körper K integriert werden, wodurch die lichteinkoppelnden und lichtauskoppelnden Lichtwellenleiter LS, LE entfallen. Für die Einsatzorte der Sendeelemente S1, S2 und Empfangselemente E1 und E2 gibt es beliebig viele Konstellationen, abweichend von dem in der Figur 3 dargestellten Ausführungsbeispiel.

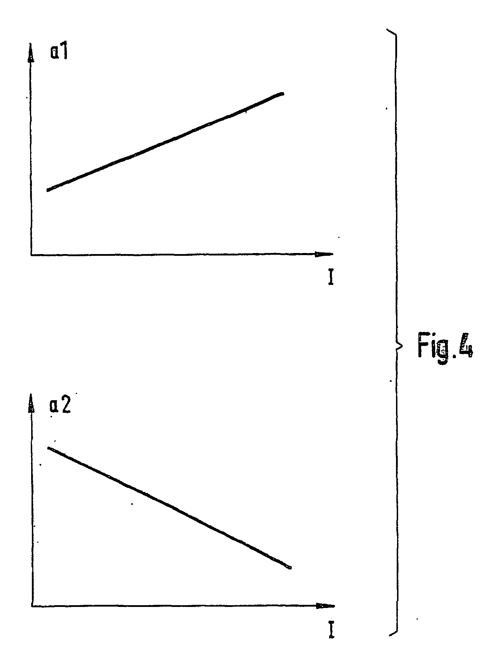

Es gibt die Möglichkeit, dass beide Empfangselemente E1 und E2 gleichartig auf Intensitätsänderungen des empfangenen Lichts reagieren. D.h., beide Ausgangssignale a1, a2 der Empfangselemente E1, E2 erfahren einen Pegelanstieg oder eine Pegelabsenkung mit zunehmender Intensität des empfangenen Lichts. Die Empfangselemente E1, E2 können aber auch so beschaffen sein, dass sie invers auf Intensitätsänderungen des empfangenen Lichts reagieren. Wie in der Figur 4 dargestellt, würde dann z.B. der Pegel des Ausgangssignals a1 des ersten Empfangselements E1 mit zunehmender Lichtintensität ansteigen und der Pegel des Ausgangssignals a2 des zweiten Empfangselements E2 mit zunehmender Lichtintensität abfallen. Die Auswertung der Signale a1 und a2 muß dann in der Auswerteschaltung AW entsprechend angepasst sein. Invers arbeitende Empfänger haben den Vorteil, dass damit zwischen Störsignalen (z.B. verursacht durch elektromagnetische Einstrahlung) und eigentlichen Messsignalen unterschieden werden kann. Die Ausgangssignalpegel a1 und a2 der beiden Empfänger E1 und E2 werden nämlich durch Störungen in die gleiche Richtung verändert. Die eigentlich zu messenden, aus dem optischen Übertragungsmedium ÜM1 bzw. ÜM2 ausgekoppelten Lichtanteile verändern dagegen die Ausgangssignalpegel a1 und a2 der Empfänger E1 und E2 in entgegengesetze Richtung. Damit können Störungen und Messsignale voneinander unterschieden werden.

## Patentansprüche

1. Verformungssensor, bestehend aus einem optischen Übertragungsmedium (ÜM1, ÜM2), Mitteln (S1, S2, SK) zum Einkoppeln von Licht in das Übertragungsmedium (ÜM1, ÜM2) und Mitteln (E1, E2, EK) zum Empfangen des über das Übertragungsmedium (ÜM1, ÜM2) übertragenen Lichts, wobei eine Auswerteeinheit (AW) vorhanden ist, welche die verformungsabhängige Veränderung der Intensität des empfangenen Lichts erfasst, **dadurch gekennzeichnet, dass** mehrere Sendeelemente (S1, S2) vorhanden sind, die Licht verschiedener Wellenlängen (λ1, λ2) in das Übertragungsmedium (ÜM1, ÜM2) einkoppeln, dass mehrere Empfangselemente (E1, E2) vorhanden sind, welche das übertragene Licht wellenlängenselektiv aus dem Übertragungsmedium (ÜM1, ÜM2) auskoppeln, und dass die Auswerteeinheit (AW) Abweichungen zwischen den Ausgangssignalen (a1, a2) der Empfangselemente (E1, E2) erfasst und eine Fehlfunktion des Sensors meldet, wenn die Abweichungen ein vorgegebenes Maß überschreiten.

2. Verformungssensor nach Anspruch 1, **dadurch gekennzeichnet, dass** das Übertragungsmedium aus ein oder mehreren Lichtwellenleitern (ÜM1) besteht.

3. Verformungssensor nach Anspruch 1, **dadurch gekennzeichnet, dass** das Übertragungsmedium (ÜM2) ein deformierbarer, lichtdurchlässiger Körper (K) ist.

4. Verformungssensor nach Anspruch 3, **dadurch gekennzeichnet, dass** zur Ein- und Auskopplung von Lichtwellen in den und aus dem lichtdurchlässigen Körper (K) in diesen Lichtwellenleiter (LS, LE) hineinragen.

5. Verformungssensor nach Anspruch 3, **dadurch gekennzeichnet, dass** die Empfangs- (E1, E2) und Sendeelemente (S1, S2) direkt in den deformierbaren, lichtdurchlässigen Körper (K) eingesetzt sind.

6. Verformungssensor nach Anspruch 1, **dadurch gekennzeichnet, dass** die vorhandenen Empfangselemente (E1, E2) auf Intensitätsänderungen des über das Übertragungsmedium (ÜM1, ÜM2) übertragenen Lichts gleichartig reagieren.

7. Verformungssensor nach Anspruch 1, **dadurch gekennzeichnet, dass** die vorhandenen Empfangselemente (E1, E2) auf Intensitätsänderungen des über das Übertragungsmedium (ÜM1, ÜM2) übertragenen Lichts invers reagieren.

## Claims

1. Deformation sensor, comprising an optical transmission medium (ÜM1, ÜM2), means (S1, S2, SK) for coupling light into the transmission medium (ÜM1, ÜM2) and means (E1, E2, EK) for receiving the light transmitted via the transmission medium (ÜM1, ÜM2), an evaluation unit (AW) being present which detects the change in intensity of the received light depending on the deformation, **characterized in that** multiple transmission elements (S1, S2) are present which couple light of various wavelengths (λ1, λ2) into the transmission medium (ÜM1, ÜM2), **in that** a plurality of reception elements (E1, E2) are present which selectively couple the transmitted light out of the transmission medium (ÜM1, ÜM2) according to wavelength, and **in that** the evaluation unit (AW) detects deviations between the output signals (a1, a2) of the reception elements (E1, E2) and signals a malfunction of the sensor if the deviations exceed a prescribed measure.

2. Deformation sensor according to Claim 1, **characterized in that** the transmission medium consists of one or more optical waveguides (ÜM1).

3. Deformation sensor according to Claim 1, **characterized in that** the transmission medium (ÜM2) is a deformable, light-transmitting body (K).

4. Deformation sensor according to Claim 3, **characterized in that** optical waveguides (LS, LE) project into the light-transmitting body (K) in order to couple light waves into and out of the said body.

5. Deformation sensor according to Claim 3, **characterized in that** the reception elements (E1, E2) and transmission elements (S1, S2) are inserted directly into the deformable, light-transmitting body (K).

6. Deformation sensor according to Claim 1, **characterized in that** the existing reception elements (E1, E2) react uniformly to changes in intensity of the light transmitted via the transmission medium (ÜM1, ÜM2).

7. Deformation sensor according to Claim 1, **characterized in that** the existing reception elements (E1, E2) react inversely to changes in intensity of the light transmitted via the transmission medium (ÜM1, ÜM2).

## Revendications

1. Capteur de déformation composé d'un milieu de transmission optique (ÜM1, ÜM2), de moyens (S1, S2, SK) pour coupler la lumière dans le milieu de transmission (ÜM1, ÜM2) et des moyens (E1, E2, EK) pour recevoir la lumière transmise par le milieu de transmission (ÜM1, ÜM2), comprenant
une unité d'exploitation (AW) qui saisit la variation de l'intensité de la lumière reçue dépendant de la déformation,
**caractérisé par**
plusieurs éléments d'émission (S1, S2) qui injectent la lumière avec différentes longueurs d'ondes (λ1, λ2) dans le milieu de transmission (ÜM1, ÜM2),
plusieurs éléments récepteurs (E1, E2) découplant de manière sélective selon la longueur d'onde la lumière transmise par le milieu de transmission (ÜM1, ÜM2) et
l'unité d'exploitation (AW) saisit les déviations entre les signaux de sortie (a1, a2) des éléments de réception (E1, E2) et signale un fonctionnement erroné du capteur si les déviations dépassent une mesure prédéfinie.

2. Capteur de déformation selon la revendication 1,
**caractérisé en ce que**
le milieu de transmission se compose d'un ou plusieurs guides d'ondes lumineuses (ÜM1).

3. Capteur de déformation selon la revendication 1,
**caractérisé en ce que**
le milieu de transmission (ÜM2) est un organe déformable transparent à la lumière (K).

4. Capteur de déformation selon la revendication 3,
**caractérisé en ce que**
des guides d'ondes lumineuses (LS, LE) pénètrent dans le corps transparent (K) pour injecter et découpler les ondes lumineuses.

5. Capteur de déformation selon la revendication 3,
**caractérisé en ce que**
les éléments de réception (E1, E2) et les éléments d'émission (S1, S2) sont intégrés directement dans le corps déformable transparent à la lumière (K).

6. Capteur de déformation selon la revendication 1,
**caractérisé en ce que**
les éléments de récepteurs (E1, E2) réagissent de la même manière aux variations d'intensité de la lumière transmise par le moyen de transmission (ÜM1, ÜM2).

7. Capteur de déformation selon la revendication 1,
**caractérisé en ce que**
les éléments de réception existants (E1, E2) réagissent aux variations d'intensité de la lumière transmise par le milieu de transmission (ÜM1, ÜM2).
